Europäisches Patentamt

European Patent Office

Office européen des brevets

(11) Veröffentlichungsnummer: **0 260 225 B1**

(19)

(12) EUROPÄISCHE PATENTSCHRIFT

(45) Veröffentlichungstag der Patentschrift: **02.01.92**

(51) Int. Cl.⁵: **H02G 11/00**, H02G 11/02

(21) Anmeldenummer: **87810475.1**

(22) Anmeldetag: **24.08.87**

(54) **Kabelführungsvorrichtung.**

(30) Priorität: **29.08.86 CH 3482/86**

(43) Veröffentlichungstag der Anmeldung:
**16.03.88 Patentblatt 88/11**

(45) Bekanntmachung des Hinweises auf die
Patenterteilung:
**02.01.92 Patentblatt 92/01**

(84) Benannte Vertragsstaaten:
**CH DE ES FR GB IT LI NL**

(56) Entgegenhaltungen:
**FR-A- 594 305**
**GB-A- 714 492**
**SU-A- 828 293**

(73) Patentinhaber: **GRETAG Aktiengesellschaft**
**Althardstrasse 70**
**CH-8105 Regensdorf(CH)**

(72) Erfinder: **Huber, Ernst**
**Märzengasse 68c**
**CH-5430 Wettingen(CH)**

(74) Vertreter: **Kleewein, Walter, Dr. et al**
**Patentabteilung CIBA-GEIGY AG Postfach**
**CH-4002 Basel(CH)**

**Beschreibung**

Die Erfindung betrifft eine Führungsvorrichtung für ein Kabel, das ein festehendes Geräteteil mit einem relativ zu diesem längs einer geradlinigen Bewegungsbahn beweglichen Geräteteil verbindet.

Eine Aufrollvorrichtung für ein Kabel ist aus der FR-A-594,305 bekannt. Bei dieser Vorrichtung wird ein gespannt gehaltenes Kabel um eine Trommel herum auf- und abgerollt. Die Trommel ist mit Hilfe ihrer Trommelfortsätze in gleitführungen geführt, die im gehäuse der Vorrichtung vorgesehen sind. Ferner umfasst die Vorrichtung noch Auschlagseile, die sowohl am Gehäuse als auch an den Trommelfortsätzen befestigt sind und die den Aufrollvorgang begrenzen. Bei dieser Vorrichtung handelt es sich allerdings um eine Aufrollvorrichtung, die als Führungsvorrichtung ungeeignet ist, insbesondere dann, wenn das zu führende Kabel mechanisch sehr empfindlich ist.

Bei vielen, insbesondere automatischen Messgeräten sind bewegliche Geräteteile vorhanden, die über Kabel mit feststehenden Geräteteilen verbunden sind. Beispielsweise bei einem Abtastdensitometer ist der über eine Strecke von z.B. 1,3 m linear bewegliche Messkopf elektrisch oder optisch über ein Lichtleiterkabel mit der feststehenden Messelektronik verbunden. Viele Kabel, insbesondere Lichtleiterkabel, sind mechanisch empfindlich, indem sie keine Knickung vertragen, eine geringe Biegesteifigkeit aufweisen und nur relativ schwachen Zugkräften ausgesetzt werden dürfen. Ausserdem ist die Umhüllung oftmals nicht abriebfest, sodass in vielen Anwendungsfällen eine gleitende Führung vermieden werden muss. Die oben erwähnte Aufrollvorrichtung ist als Führungsvorrichtung für solche Zwecke ungeeignet, da bei ihr die Zugkräfte komplett auf das Kabel wirken, was eine Beschädigung des Kabels zur Folge haben kann. Zudem kann eine Beschädigung des Kabels auch auftreten, falls die Umhüllung des Kabels nicht abriebfest ist.

Die Aufgabe der Erfindung ist darin zu sehen, eine speziell für solche mechanisch empfindlichen Kabel geeignete Führungsvorrichtung zu schaffen.

Die erfindungsgemässe Vorrichtung ist im Anspruch 1 beschrieben. Bevorzugte Ausführungsbeispiele ergeben sich aus den abhängigen Ansprüchen.

Im folgenden wird die Erfindung anhand der Zeichnung näher erläutert. Es zeigen:

Figur 1 eine schematische Seitenansicht und
Figur 2 eine schematische Draufsicht auf die wichtigsten Teile einer erfindungsgemässen Vorrichtung.

Das zu führende Kabel ist in den Figuren mit K bezeichnet. Es führt von einem durch die Bezugsziffer 1 symbolisierten ortsfesten Geräteteil zu einem relativ zu diesem längs einer geradlinigen Bewegungsbahn hin und herbewegbaren Geräteteil 2, wobei die Beweglichkeit durch den Doppelpfeil 3 angedeutet ist. Bei einem beispielsweisen Einsatz der Vorrichtung an einem Abtastdensitometer kann das Kabel ein Lichtleiterkabel sein, welches den beweglichen Messkopf des Densitometers optisch mit der feststehenden Messelektronik verbindet.

Das Kabel K ist um 180˚ um eine Seiltrommel S geschlungen, welche mittels zweier Tragsaitenanordnungen 5, 6 und 7 gewissermassen "frei schwebend" aufgehängt ist. Die eine Tragsaitenanordnung umfasst zwei Tragsaiten 5 und 6, die an ihrem einen Ende jeweils ortsfest eingespannt sind und mit ihrem anderen Ende je eine Seilscheibe 8 bzw. 9 der Seiltrommel S umschlingen und an diesen befestigt sind. Die andere Tragsaitenanordnung umfasst (hier) nur eine einzige Tragsaite 7, welche mit ihrem einen Ende an einer Ausgleichsfeder 10 befestigt ist, die wiederum ortsfest angeordnet ist, und mit ihrem anderen Ende eine weitere Seilscheibe 11 der Seiltrommel S umschlingt und an dieser befestigt ist. Die Umschlingungsrichtungen der Tragsaiten 5 und 6 und der Tragsaite 7 sind gegensinnig.

Die drei Tragsaiten 5 bis 7 sind, teilweise via die Ausgleichsfeder 10, so stark zwischen den ortsfesten Geräteteilen 12 und 13 gespannt, dass die Seilrolle S ohne wesentlichen Durchhang quasi frei schwebend getragen wird.

Die Tragsaiten 5 bis 7 sind, wie schon erwähnt, um die Seilscheiben 8, 9 und 11 geschlungen. Zwischen diesen Seilscheiben befinden sich Wikkelzylinder 14 und 15, welche zusammen mit den Seilscheiben die Seiltrommel S bilden. Durch die symmetrische Anordnung der mit den Tragsaiten 5 und 6 zusammenwirkenden Seilscheiben 8 und 9 in Bezug auf die mit der Tragsaite 7 zusammenwirkende Seilscheibe 7 kompensieren sich paralell zur Achse der Seiltrommel S wirkende Kraftkomponenten. Das zu führende Kabel K ist um einen der Wickelzylinder 14 bzw. 15 geschlungen.

Die wirksamen Radien r der beiden äusseren Seilscheiben 8 und 9 sind etwas kleiner als der Radius R der mittleren Seilscheibe 11. Der Durchmesser D des Wickelzylinder 14 ist um die Dicke d des Kabels K kleiner als der wirksame Durchmesser 2r der beiden äusseren Seilscheiben 8 und 9.

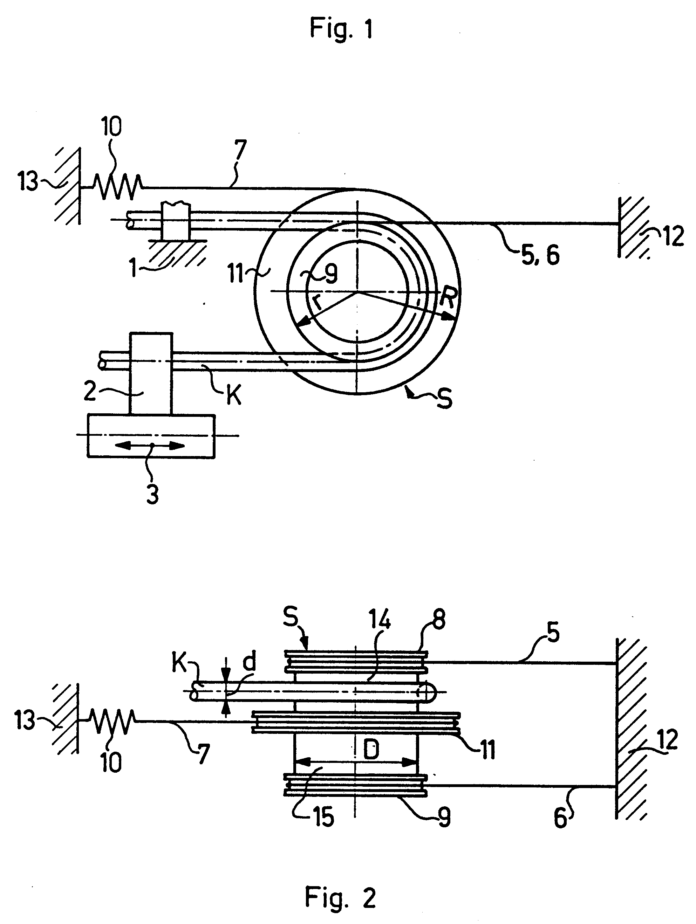

Wird das am beweglichen Geräteteil 2 befestigte Kabelende in Figur 1 um eine bestimmte Strecke nach links bewegt, so bewegt sich die Seiltrommel S unter Drehung um die halbe Strecke nach links, wobei die Ausgleichsfeder 10 gespannt wird. Die für das Bewegen der Seiltrommel S erforderliche Zugkraft ist dabei sehr gering und kann durch Variation der Seilscheibenradien in weiten Grenzen eingestellt werden. Wird das Kabelende in der Zeichnung nach rechts bewegt, so bewegt sich aufgrund der Wirkung der gespannten Ausgleichsfeder 10 auch die Seiltrommel S nach rechts. Bezüglich der im Kabel wirkenden Zugkräfte gilt das gleiche wie für den Fall der Bewegung nach links.

Die erfindungsgemäss "frei schwebend" aufgehängte Seiltrommel besitzt also einerseits eine hohe Tragkraft, erfordert aber anderseits nur eine extrem niedrige, in weiten Grenzen einstellbare Zugkraft und ist dadurch ideal für das Führen von mechanisch empfindlichen Kabeln, insbesondere Lichtleiterkabeln geeignet.

Durch die unterschiedlichen Umschlingungsdurchmesser der Seilscheiben ergibt sich eine Kraftuntersetzung, welche an das jeweilige Problem angepasst werden kann. In der Praxis beträgt das Verhältnis zwischen dem Unterschied (2R - 2r) der beiden Umschlingungsdurchmesser 2R und 2r und dem kleineren Umschlingungsdurchmesser 2r etwa 0,1 bis 0,02, vorzugsweise etwa 0,05 bis 0,04. Selbstverständlich sind je nach Anwendungsfall auch andere Werte möglich.

Der Umschlingungswinkel der Tragsaiten 5 bis 7 ist selbstverständlich auf den maximalen Hub des beweglichen Kabelendes bzw. der Seiltrommel so abgestimmt, dass unabhängig von der Position der Seiltrommel keine Tragsaite jemals vollständig abgewickelt ist.

Die dargestellte Führungsvorrichtung kann selbstverständlich nicht nur ein einzelnes Kabel, sondern auch mehrere Kabel gleichzeitig führen, wobei diese Kabel nicht unbedingt alle von der selben Art zu sein brauchen. Beispielsweise können sowohl Lichtleiterkabel als auch elektrische Kabel geführt werden.

Wie schon erwähnt, ist die erfindungsgemässe Führungsvorrichtung besonders geeignet zum Einsatz in einem Abtastdensitometer, bei dem ein motorisch bewegter Messkopf optisch über ein Lichtleiterkabel mit einer in Bezug auf das Gerät feststehenden Mess- und Auswerteelektronik verbunden ist. Selbstverständlich ist die Vorrichtung aber auch für andere Einsatzzwecke geeignet.

**Patentansprüche**

1. Führungsvorrichtung für ein Kabel, das ein feststehendes Geräteteil (1) mit einem relativ zu diesem längs einer geradlinigen Bewe- gungsbahn beweglichen Geräteteil (2) verbin- det, gekennzeichnet durch eine Seiltrommel (S), über die das zu führende Kabel (K) zumindest teilweise geschlungen ist, und die an zwei sich im wesentlichen parallel zur Bewegungsbahn des beweglichen Geräteteils (2) erstrek- kenden und sie gegensinnig umschlingenden Tragsaitenanordnungen (5-7) drehbar aufgehängt ist, wobei die Tragsaitenanordnungen an im wesentlichen einander gegenüberliegenden Befestigungspunkten (12,13) ortsfest relativ zu dem feststehenden Geräteteil (1) eingespannt sind und die Seiltrommel (S) zwischen den Befestigungspunkten (12,13) der Tragsaitenanordnungen (5-7) bewegbar ist.

2. Vorrichtung nach Anspruch 1, dadurch gekenn- zeichnet, dass wenigstens eine Tragsaitenan- ordnung (5, 6; 7) eine Ausgleichsfeder (10) einschliesst und dass die beiden Tragsaitenanordnungen (5-7) die Seiltrommel (S) auf ver- schiedenen Durchmessern (2r, 2R) umschlin- gen.

3. Vorrichtung nach Anspruch 2, dadurch gekennzeichnet, dass eine Tragsaitenanordnung zwei Saiten (5, 6) umfasst, die bezüglich der anderen Tragsaitenanordnung (7) symmetrisch an der Seiltrommel (S) angreifen, so dass sich axiale Kraftkomponenten gegeseitig kompensieren.

4. Vorrichtung nach Anspruch 2 oder 3, dadurch gekennzeichnet, dass das Verhältnis der Differenz (2R - 2r) der Umschlingungsdurchmesser (2R, 2r) der beiden Tragsaitenanordnungen (5- 7) zum kleineren (2r) der beiden Umschlingungdurchmesser etwa 0,1 bis 0,02, vorzugsweise etwa 0,05 bis 0,04 beträgt.

5. Vorrichtung nach einem der Ansprüche 1-4, dadurch gekennzeichnet, dass die Seiltrommel (S) eine mittlere und zwei äussere Seilscheiben (8, 9, 11) sowie zwei je zwischen der mittleren und einer der äusseren Seilscheiben angeordnete Wickelzylinder (14, 15) umfasst, wobei die Durchmesser (D) der Wickelzylinder (14, 15) um die Dicke (d) des sie umschlingenden Kabels (K) geringer ist als der Umschlingungsdurchmesser (2r) der mittleren (11) oder der beiden äusseren (8, 9) Seilscheiben.

6. Vorrichtung nach einem der Ansprüche 1-5, dadurch gekennzeichnet, dass das zu führende Kabel (K) ein Lichtleiterkabel ist.

7. Vorrichtung nach einem der Ansprüche 1-6, dadurch gekennzeichnet, dass das Kabel (K) die Seiltrommel (S) im wesentlichen halb umschlingt.

8. Vorrichtung nach einem der Ansprüche 1-7, dadurch gekennzeichnet, dass die Seiltrommel mehrere Kabel gleichzeitig führt.

9. Verwendung der Vorrichtung gemäss einem der Ansprüche 1-8 in einem Abtastdensitometer für die Führung eines den beweglichen Messkopf mit der festehenden Auswerteein-richtung verbindenden Lichtleitkabels und ge-gebenenfalls weiterer optischer oder elektri-scher Kabel.

## Claims

1. A guiding apparatus for a cable connecting a stationary component (1) with a component (2) that is displaceable relative to said component (1) along a linear displacement path, comprising: a cable drum means (S) over which the cable (K) to be guided is at least partially looped, and which is rotatably suspended from two supporting cord arrangements (5-7) which extend substantially parallel to the displacement path of the displaceable component (2) and are looped around said cable drum in opposing directions, wherein the supporting cord arrangements are fixed at securing points (12, 13) that are substantially opposite one another, in such a manner that they are fixed in position relative to the stationary component (1) and the cable drum (S) is displaceable between the securing points (12, 13) of the supporting cord arrangements (5-7).

2. Apparatus according to claim 1, wherein at least one supporting cord arrangement (5, 6; 7) comprises a compensating spring (10) and the two supporting cord arrangements (5-7) loop around the cable drum (S) at different diameters (2r, 2R).

3. Apparatus according to claim 2, wherein one supporting cord arrangement comprises two cords (5, 6) which act on the cable drum (S) symmetrically relative to the other supporting cord arrangement (7) so that axial force components are mutually compensating.

4. Apparatus according to claim 2 or claim 3, wherein the ratio of the difference (2R - 2r) between the looping diameters (2R, 2r) of the two supporting cord arrangements (5-7) to the smaller (2r) of the two looping diameters is approximately 0.1 to 0.02, preferably about 0.05 to 0.04.

5. Apparatus according to any one of claims 1 to 4, wherein the cable drum (S) comprises one centre and two outer pulleys (8, 9, 11) together with two winding cylinders (14, 15) each located between the centre pulley and a respective one of the outer pulleys, wherein the diameters (D) of the winding cylinders (14, 15) are smaller by the thickness (d) of the cable (K) looping around them than the looping diameter (2r) of the centre pulley (11) or of the two outer pulleys (8, 9).

6. Apparatus according to any one of claims 1 to 5, wherein the cable (K) to be guided is an optical fibre cable.

7. Apparatus according to any one of claims 1 to 6, wherein the cable (K) loops substantially half round the cable drum (S).

8. Apparatus according to any one of claims 1 to 7, wherein the cable drum guides a plurality of cables simultaneously.

9. Use of the apparatus according to any one of claims 1 to 8 in a scanning densitometer for guiding an optical fibre cable connecting the displaceable measuring head to the stationary evaluating device and, if appropriate, other optical or electrical cables.

## Revendications

1. Dispositif de guidage pour câble, qui relie une partie fixe (1) d'appareil à une partie (2) d'appareil, mobile par rapport à celle-ci, le long d'une trajectoire rectiligne, dispositif caractérisé en ce qu'il comporte un tambour enrouleur (S) sur lequel le câble (K) qu'il s'agit de guider est au moins partiellement enroulé et qui est suspendu de façon rotative sur deux dispositifs (5-7) à cordes de support, qui s'étendent sensiblement parallèlement à la trajectoire de la partie mobile (2) d'appareil et qui s'enroulent en sens inverses sur celui-ci, les dispositifs à cordes tendues de support étant encastrés sur des points (12, 13) de fixation situés sensiblement en face l'un de l'autre, de façon fixe par rapport à la partie fixe (1) d'appareil, et en ce que le tambour (S) est susceptible d'être déplacé entre les points (12, 13) de fixation des dispositifs (5 à 7) à cordes tendues de support.

2. Dispositif selon la revendication 1, caractérisé en ce qu'au moins un dispositif (5, 6, 7) à cordes tendues de support comporte un ressort (10) de compensation, et en ce que les deux dispositifs (5 à 7) à cordes tendues de support s'enroulent autour du tambour (S) sur des diamètres (2r, 2R) différents.

3. Dispositif selon la revendication 1, caractérisé en ce qu'un dispositif à cordes tendues de support comporte deux cordes (5, 6) tendues qui attaquent le tambour (S) symétriquement par rapport à l'autre dispositif (7) à corde tendue, de façon telle que les composantes axiales de forces se compensent mutuellement.

4. Dispositif selon la revendication 2 ou 3, caractérisé en ce que le rapport entre la différence (2R-2r) des diamètres (2R,2r) d'enroulement sur les deux dispositifs (5-7) à cordes tendues et le plus petit (2r) des deux diamètres d'enroulement vaut d'environ 0,1 à 0,02, de préférence d'environ 0,05 à 0,04.

5. Dispositif selon une des revendications 1 à 4, caractérisé en ce que le tambour enrouleur (S) comporte une poulie médiane (11) pour corde et deux poulies extérieures (8,9) pour corde, ainsi que deux cylindres (14, 15) d'enroulement disposées chacun entre la poulie médiane pour corde et une des poulies extérieures pour corde, le diamètre (D) des cylindres (14, 15) d'enroulement étant inférieur, d'une longueur égale à l'épaisseur (d) du câble (K) qu'il s'agit d'enrouler, au diamètre (2r) d'enroulement de la poulie médiane (11) pour corde ou des deux poulies extérieures (8, 9) pour corde.

6. Dispositif selon une des revendications 1 à 5, caractérisé en ce que le câble (K) qu'il s'agit de guider est un câble à conducteurs optiques.

7. Dispositif selon une des revendications 1 à 6, caractérisé en ce que le câble (K) entoure, sensiblement sur sa moitié, le tambour enrouleur (S).

8. Dispositif selon une des revendications 1 à 7, caractérisé en ce que le tambour enrouleur guide simultanément plusieurs câbles.

9. Emploi du dispositif selon l'une des revendications 1 à 8, dans un densitomètre à balayage, pour le guidage d'un câble à conducteurs optiques et, le cas échéant, d'autres câbles optiques ou électriques reliant la tête de mesure mobile au dispositif fixe d'exploitation.

Fig. 1

Fig. 2